# EUROPEAN PATENT SPECIFICATION

(11) **EP 0 963 408 B1**
(45) Date of publication and mention of the grant of the patent: **17.05.2006**
(21) Application number: 98910042.5
(22) Date of filing: 24.02.1998
(51) Int. Cl.: C08L 23/16, B32B 27/32, C08J 5/18

(54) **ORIENTED COEXTRUDED FILMS**
COEXTRUDIERTE GESTRECKTE FILME
FILM ORIENTE COEXTRUDE

(30) Priority: 25.02.1997 US 806182; 28.04.1997 US 847730; 01.08.1997 US 905211; 11.08.1997 US 55253 P
(43) Date of publication of application: 15.12.1999
(60) Divisional application: 03075729.8
(73) Proprietor: ExxonMobil Chemical Patents Inc., Baytown, TX 77520-5200 (US)
(72) Inventor: BRANT, Patrick, Seabrook, TX 77586 (US); FISCUS, David, M., Houston, TX 77062 (US); VAN LOON, Achiel, Josephus, Maria, B-2900 Scoten (BE)
(74) Representative: van Westenbrugge, Andries
(86) International application number: PCT/US1998/003562
(87) International publication number: WO 1998/037140

(56) References cited:
- EP-A- 0 802 046
- WO-A-92/14784
- WO-A-95/13321
- WO-A-97/44178

## Description

### BACKGROUND OF THE INVENTION

### Field of the Invention

This invention relates to an oriented, multilayered film comprising at least one layer of an ethylene based polymer. More specifically, this invention relates to a multilayer film made wherein at least one layer is ethylene based random copolymer, and wherein the film has been coextruded prior to being stretched for orientation.

### Description of the Prior Art

Oriented, multilayered films are an important class of industrial products useful principally in the wrapping or packaging of various products in commerce. In particular, oriented isotactic polypropylene film is known to be useful for its high barrier properties, clarity and stiffness. Polypropylene for oriented films is typically isotactic homopolymer, or are modified polypropylene blends of isotactic polypropylene with differing isotactic polypropylene, e.g., differing melt flow rates (MFR) or tacticity, atactic polypropylene, syndiotactic polypropylene, random polypropylene copolymers having minor amounts of ethylene or higher α-olefins, and ethylene copolymers, see for example, U.S. patent 4,950,720 and WO 96/02386. As indicated in U.S. patent 4,921,749 and related art, other components such as petroleum resins may be added as well to modify properties such as heat sealing performance, gas permeability and stiffness. Such oriented polypropylene, particularly biaxially oriented polypropylene (BOPP), has many desirable properties. However, excellent hot tack and heat seal are not among these since such films lack significant heat sealing and hot tack performance at operating temperatures suited to efficient industrial practice.

Non-prepublished WO 97/44178 discloses a coextruded blown film comprising an inside layer, a middle layer and an outside layer. According to Examples 1 and 2, the middle layer is a polypropylene and the inside and outside layers comprise a LLDPE whereas according to Examples 3 and 4 the middle layer is a polypropylene, the outside layer a blend of LLDPE and LDPE and the inside layer LLDPE.

Non-prepublished EP A 802.046 discloses a three layer film having a first exterior layer of a polypropylene homopolymer or propylene copolymer, a second interior layer comprising a LLDPE and a third heat sealable layer, said heat sealable layer comprising a polyethylene homopolymer or copolymer or a blend of a polyethylene homopolymer or copolymer and a propylene homopolymer or copolymer.

Non-prepublished WO 98/37141 discloses a three-layer ABC film, wherein layer A comprises a LLDPE. Layer B may be selected from a large group of materials including propylene polymers. Layer C is a random copolymer of propylene having up to 20 percent by weight of ethylene.

WO 92/14784 suggests heat sealable blend compositions said to be suitable for film and film structures that include 30 - 70 wt % of a low melting polymer that may be an ethylene based copolymer having a density from 0.88 g/cm³ to 0.915 g/cm³ (a) MWD no greater than 3.5 and a composition distribution breadth index greater than 70 percent and (b) different from (a) from 70 to 30 wt.% of a propylene based polymer having 88 mole % to 100 mole % propylene and from 12 mole % to 0 mole % of an alpha olefin other than propylene.

WO A 95/13321 suggests heat sealed articles and heat sealable films comprising a polymer blend of a first polymer having a narrow molecular weight and composition distribution and a second polymer having a broad molecular weight distribution and compositions distribution.

Accordingly, various polymeric layers have been used or proposed as heat sealing layers for biaxially oriented polypropylene film. Among those used industrially and taught in the patent literature are polyolefins, ethylene-based and propylene-based. Preferred heat sealing layers for BOPP have in the past typically been high propylene-content polyolefins, e.g., propylene-ethylene copolymers with 1-20 wt% ethylene, and propylene-ethylene-butene terpolymers with up to 10 wt% each of ethylene and butene and blends of those with other olefin polymers. See for example, U.S. patents 4,643,945 (LLDPE with propylene terpolymer) and 4,921,749 (propylene-ethylene copolymers) and the others listed above. These polymer selections do reduce the chemical dissimilarity of the sealing layer and core layers so as to allow good adhesion between them, but result in the requirement that subsequent heat sealing be conducted at temperatures at or above about 120 "C, requiring long contact time with heating elements or high heat input to achieve the necessary temperature ranges.

### Summary of the Invention

The invention is an oriented multilayer film comprising (a) at least one outer layer comprising from 50 to 100 wt.% of an ethylene copolymer having a density of 0.900-0.935 g/cm³ and a composition distribution breadth index (CDBI) of 50-95%; (b) a propylene core layer, the at least one outer layer being in contact with the polypropylene core layer; and (c) a second outer layer, the second outer layer being in contact with the propylene core layer, the film being made by coextrusion of the at least one outer layer, the core layer and the second outer layer, and subsequent orientation, excluding a random copolymer of propylene and up to 20 weight % of ethylene or a terpolymer of propylene, ethylene and butene as the second outer layer.

Preferably the ethylene copolymer outer or skin layer, or layers, will have a molecular weight distribution (MWD;M_{w}/Mₙ) of 1.8-3.5 and a melt index (MI) of 0.5-10 g/10mins (ASTM D 1238, 190°C, 2.16 kg). The coextruded layers can be biaxially oriented on tenter frame equipment without difficulties caused by the presence of low molecular weight amorphous polymer fractions inherently present in traditional Ziegler-Natta linear low density polyethylene. Problems of undesirable adherence to drums and jaws in processing and the presence of extractables in the films made hereby are essentially eliminated. Optical properties of biaxially oriented polypropylene films (BOPP) are retained while the sealing temperature is lowered and the heat seal strength and the hot tack properties are improved. The ethylene copolymer heat seal layer thus offers a practical, economical solution for preparing heat seal BOPP for all of stiff, flexible and heat shrinkable packaging.

### Brief Description of the Figures

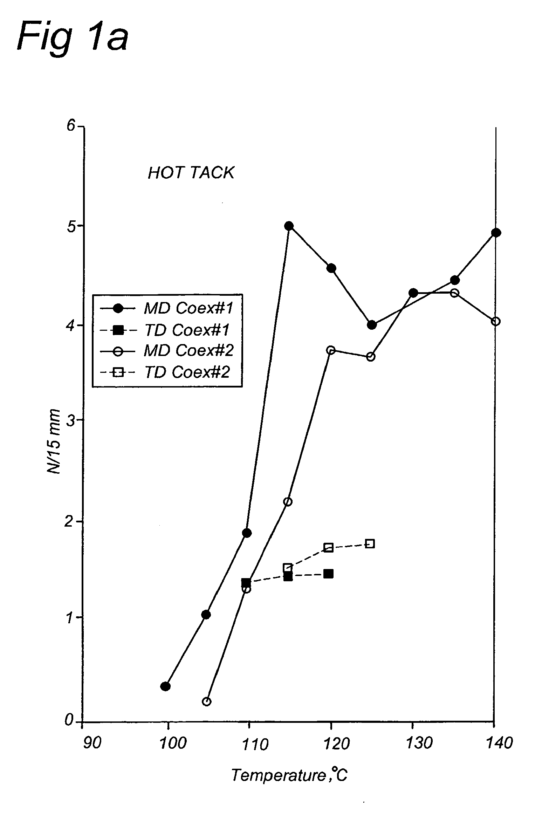

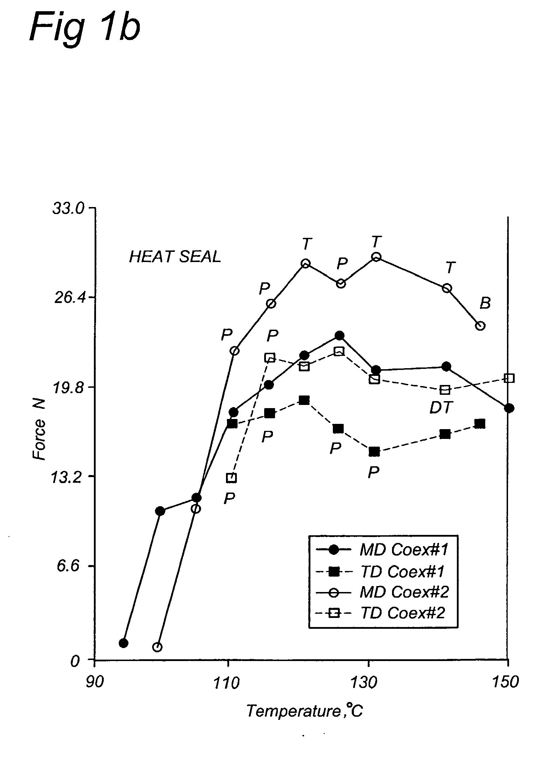

Figure 1 is a graph of the heat seal (1a) and hot tack (1b) performance of the film of the examples.

The figures are the hot tack and sealing behaviour of 10% mLLDPE and 90% polypropylene of biaxially oriented coextruded films.

### Detailed Description of the Invention

Ethylene copolymers suitable in accordance with the invention are commercially available and can be made by essentially single-sited catalysts such as metallocene catalysts. The use of the term "essentially single-sited catalyst" refers here to any olefin polymerization catalyst that provides narrow molecular weight distribution (MWD; M_{w}/Mₙ) and narrow composition distribution, as measured by the composition distribution breadth index (CDBI). Commercially available products specifically include the metallocene LLDPE resins (m-LLDPE) marketed by Exxon Chemical Co., Houston, Texas, as EXCEED ® 350D60 (ethylene-hexene copolymer, MI = 1.0, density 0.917 g/cm³) and 377L60 (ethylene-hexene copolymer, MI = 1.0, density 0.922), and the metallocene plastomer ethylene copolymers marketed under the tradenames EXACT ® , available from Exxon Chemical Co. and AFFINITY ® , available from Dow Chemical Company, Midland, Michigan, where such plastomers have densities at or above about 0.900. Typically the ethylene copolymers will comprise as comonomers any C₃-C₁₂ α-olefin, preferably one or more C₄-C₈ α-olefin. The comonomer content is established by the measured density, the density preferably being in the range from 0.910 to 0.925 g/cm³, most preferably from 0.915 to 0.925 g/cm³. Preferably the molecular weight of the invention ethylene copolymers as measured in MI (polyethylene melt index, ASTM D 1238) will be in the range from about 0.7 - 8.0, and most preferably 0.7 - 5.0 . The MWD is typically 2.0 - 3.5, preferably 2.0 - 2.7. The CDBI will preferably be above 55 %, most preferably above 65 %. The melt index ratios (MIR, I₂₁/I₂) of the suitable ethylene copolymers will typically range from 16 to 50.

Additional ethylene copolymer compositions suitable as sealing layers in accordance with the invention include polyethylene blend compositions wherein the ethylene copolymer defined above comprises at least 50 wt% and the complement is minor amounts of essentially compatible ethylene-based homopolymers or copolymers comprising ethylene and one or more of C₃-C₁₂ α-olefins, cyclic olefins, vinyl aromatic and polar vinyl monomers, such as norbomene, alkyl-substituted norbomenes, styrene, alkyl-substituted styrenes, vinyl acetate, acrylic acid, methyl acrylate, butylacrylate, etc. The blend compositions comprising ethylene-α-olefin copolymers are preferably those having an overall density of from 0.910 to 0.925 and MI of from 0.7 to 5.0 g/10mins. For blends comprising the other ethylene copolymers; the copolymers are preferably those having 2.5 mol% comonomer and equivalent MI. Specific blend polyethylenes include any of LDPE, plastomers, LLDPE, MLDPE or HDPE, as those terms are used in the art, prepared by Ziegler-Natta polymerization, essentially single-sited coordination polymerization, and high pressure-free radical polymerization. Polymers comprising vinyl monomers include ethylene-vinyl (EVA), ethylene-vinyl alcohol (EVOH), ethylene acrylic acid (EAA), ethylene-methylacrylate (EMA). Blend suitable ethylene copolymers are those that have ethylene content sufficient to provide ethylene crystallinity so as to assure that the blend compositions will not be subject to gross phase separation within the blend compositions upon cooling.

Copolymers of lower crystallinity, and thus density at or below 0.915 ("VLDPE"), including certain plastomer ethylene copolymers with C₄-C₈ α-olefins having densities from 0.870 to 0.915 g/cm³ are particularly suitable as blend components when present in sufficient amounts to allow increased line speeds due to the presence of the lower melting point, low density copolymers. The VLDPE copolymers will preferably be present in an amount up to 30 wt.%, preferably from 15-20 wt.%. Further description of the VLDPE and its uses in film applications appears in U.S. patents 5,206,075 and 5.359.792.

Suitable polypropylene core or outer layer or layers will comprise any of the isotactic polypropylene compositions or blends known to be suitable for use as uniaxially or biaxially oriented films. Both of traditional Ziegler-Natta polypropylene resins and those of the newer essentially single-sited catalysts are suitable where having molecular weights sufficient to assure a match in melt viscosity suitable for coextrusion. Thus propylene polymers having melt flow rate "MFR" (ASTM D 1238, 230°C, 2.16 kg) of from about 1.0 to about 40, preferably to 10, most preferably to 6.0 are suitable. The film grade polypropylene products ESCORENE® PP4592 E7, PP4372, and PP 4252 E1 of Exxon Chemical Co. are particularly suitable. Additionally, polypropylene random copolymers containing up to about 15 mol. % of at least one C₂ - C₈ α-olefin other than propylene will be suitable as a coextrudable polypropylene layer, as core, outer or intermediary layer.

Methods of preparing coextruded films are well known in the art. For this invention the ethylene copolymer compositions suitable as sealing layers and the polypropylene compositions are separately but concurrently extruded and joined for coextrusion prior to orientation. Because the melt viscosity of the preferred ethylene copolymers, or blends comprising them, is high enough to maintain sufficient dimensional stability at processing temperatures necessary to extrude the polypropylene film, both of thick and thin films of uniform thickness across the film surface can be maintained. The lack of low molecular weight amorphous fractions and the sufficiently high melting points of the ethylene copolymer compositions allow excellent processing without sticking to processing equipment yet while retaining the particularly suitable dimensional stability.

A preferred method of preparing the films according to the invention comprises a coextrusion process with subsequent orientation of the coextrudate.
Though previously known in the industry that lower-melting point polymers can be applied by the coating method, where the polymer is extruded in a molten or softened state onto the preformed higher softening point polymer film, it is also known that the use of chemically dissimilar polymers can result in insufficient adhesion between the layers. Thus the use of additional tie layers (or adhesive layers) capable of adhering to both layers is often recommended when two different polymers are to be combined. See, e.g., J. 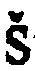 tepek, et al, Polymers As Materials For Packaging, Ch. 5, p. 346-349 (Ellis Horwood Ltd., 1987, English language edition).

The discovery of this invention however resulted from the observation that the use of coextrusion multiple extruders in two or more streams at least one of which provides the ethylene copolymer compositions and another of which provides the polypropylene compositions, and concurrent feeding into a multichannel die such that the two layers are in contact with each other for slit-die extrusion and subsequent orientation, can be used to prepare films that retain excellent adhesion between the layers and excellent composite film properties without the need of additional tie or adhesive layers . The excellent clarity of BOPP is retained while the seal initiation temperature is decreased and the sealing properties of the film are increased both in total strength and without having to apply sufficient heating to soften the polypropylene layer. Since the sealing layer polymers of the invention have softening points from 80 to 100 °C, and melting points between 100 and 120 °C, the effective heat sealing temperature is lower than that of typical propylene copolymer sealing layers, can be achieved more quickly in processing and results in increased line speeds in manufacturing use.

Films according to the invention particularly include oriented two-layer A/B films having the A sealing layer and a B outer layer of polypropylene or three-layer A/B/A films having two sealing layers A on either side of the core B polypropylene layer. Additional layers or treatments of the films in the B layer are also suitable, such known treatments as metallation or corona discharge treatment with the addition of other barrier layers or tie layers are also well known in the art to be applicable in any combination for specific articles of commerce.
The A heat sealing layer can be on one side of a multilayered film, and can be used as another core layer, or on both sides to form an additional heat sealing layer. Such composite films will all benefit from the improved adherence of the A and B layers and the compatibility of the combined layered film for orientation, particularly uniaxial orientation and biannual orientation, such as by use of the tenter frame methods of orientation. Additionally, the broad plateau sealing temperatures, i.e. 110 °C - 140 °C provide a significant advantage for industrial processes where accurate temperature controls are uneconomical are otherwise not available. The heat seals formed by pressing and heating together two such layers can fail largely by peeling within the noted plateau area when subjected to a breaking force of 1.32 - 6.6 kg (0.6-3.0 lbs). This failure mechanism provides excellent characteristics for peelable seals useful the packaging industry, particularly for flexible packaging. Higher peel strengths (>6.6 kg (3.0 lb.), e.g. 6.6 - 13.2 kg (3.0-6.0 lb.) can be achieved by increasing the thickness of the heat sealing layer exemplified herein, and/or by introducing one or more additional coextruded tie or adhesive layer such as those comprising ethylene or propylene copolymers.

The polymer characterizations presented in this application were conducted under the following conditions and procedures. MI was determined as described in ASTM D 1238. All of M_{w}, Mₙ, and M_{w}/Mₙ (MWD) were determined by gel permeation chromatography (GPC) using a DRI differential refraction index detector, i.e. a Waters 150C GPC instrument with DRI detectors. CDBI was determined in accordance with the method described in columns 7 and 8 of WO 93/03093. Density was measured in accordance with ASTM D 792 for both the polyethylene and polypropylene.

### Examples

**I.** TM Long Experiments: Coextruded structures were cast on a laboratory Killion line and then biaxially oriented (6x6) on a TM Long line to prepare a 2-layer A/B film, and a 3-layer ABA film respectively comprising one and two heat sealing layers of 5.08 µm (0.2 mil) final thickness each and a polypropylene core layer of 10.16 µm (0.4 mil) thickness. The ethylene copolymer heat sealing layers were extruded from EXCEED ® 350D60 (ethylene-hexene copolymer, MI = 1.0. density = 0.917 g/cm³) or 377L60 (ethylene-hexene copolymer, MI = 1.0, density = 0.922 g/cm³) resins and the polypropylene layer was extruded from PD4252E1, all available from Exxon Chemical Co.
**II**. Pilot Line Experiments: The films of Tables 1-4 below were prepared on a Black Clawson line and biaxially oriented on a tenter frame as described in the Tables 1-3 below. The film properties are presented in Table 4.

**Table 1**

| Processing Information for Films made using Black Clawson Line* | | | | | |
|---|---|---|---|---|---|
| | A/B 10/90 (wt. ratio) | | | | A/B/A 10/80/10 (wt. ratio) |
| | 350D60 | | 377L60 | | A 377L60 B PD4252E1 |
| | PD4252E1 | | PD4252E1 | | |
| Film Gauge µm | 254 | 508 | 254 | 508 | 254 |
| (mils) | (10) | (20) | (10) | (20) | (10) |

| A-Layer: Barrier Screw: B Extruder | | | | | |
|---|---|---|---|---|---|
| Screw Speed (RPM) | 8 | | 8 | | 15 |
| Output kg/m (lb./h) | 21.3 (47) | | 21.3 (47) | | 41.98 (92) |
| Melt Temp. (°F)/°C | (550)/288 | | (559)/293 | | (560)/293 |
| Load (Amps) | 67 | | 56 | | 107 |
| Volts | 25 | | 22 | | 41 |
| Head Press. (psi)/kPa | (1847)/12,735 | | (1715)/11,824 | | (2950)/20,340 |

| B-Layer: Metering Screw: A Extruder | | | | | |
|---|---|---|---|---|---|
| Screw Speed (RPM) | 151 | | 141 | | 131 |
| Output kg/h (lb/h) | 192.2(423) | | 192.2(423) | | 167.2(368) |
| Melt Temp. (°F)/ °C | (586)/308 | | (585)/307 | | --- |
| Load (Amps) | 128 | | 128 | | 123 |
| Volts | 469 | | 431 | | 406 |
| Head Pressure (psi)/kPa | (4100)/28,270 | | (4266)/29,414 | | (4186)/28,862 |

| Output kg/h (lb/h) | | | | | |
|---|---|---|---|---|---|
| Total | 213(470) | | 213(470) | | 209(460) |

| Line Speed m/min (ft/min) | | | | | |
|---|---|---|---|---|---|
| | 15.24(50) | | 8.22(27) | | 13.1(43) |

| | | | | | |
|---|---|---|---|---|---|
| Screw speed and Specific output were the same for all films. 8.89 cm (3.5 inch) 30:1 L/D, 1.06m (42 inch) Wide Die. Air Knife Pinning. Primary Chill Roll was (87 °F) 31°C and Secondary Chill Roll was (75 °F) 24°C Line speed was adjusted to achieve the desired gauge. All other processing conditions were constant. | | | | | |

**Table 2**

| MD Conditions used for Cast Films* | | | |
|---|---|---|---|
| Coextruded Films | A/B | | A/B/A |
| | 10/90 (wt.ratio) | | 10/80/10(wt.ratio) |
| | 350D60/ | 377L60/ | A 377L60/ B |
| | PD4252E1 | PD4252E1 | PD4252E1 |
| Roll Temperature °C (° F) | | | |
| Preheat | 132(270) | | |
| Slow Draw | 129.4(265) | | |
| Fast Draw | 129.4(265) | | |
| Annealing | 121(250) | | |
| Cooling | 20(68) | | |

| MD Draw | | | |
|---|---|---|---|
| | 4/5 | 5 | 5 |

| | | | |
|---|---|---|---|
| *Stretch Gap of 0.081 cm (0.032 Inch). Draw Speed was Adjusted to Achieve desired MD Draw Ratio. | | | |

**Table 3**

| TD Orienting Conditions used for Cast Films | | | | |
|---|---|---|---|---|
| Coextruded Films | A/B | | | A/B/A |
| | 10/90 (wt.ratio) | | | 10/80/10(wt.ratio) |
| | 350D60 PD4252E1 | | 377L60 | A 377L60 |
| | | | PD4252E1 | B PD4252E1 |
| Initial Gauge µm (mils) | 250.4(10) | 500.8(20) | 250.4(10) | 500.8(20) |

| Oven Temperatures by Oven Section °C (°F) | | | | |
|---|---|---|---|---|
| Preheat | 157° (315°) | | | |
| Stretch | 157° (315°) | | | |
| Anneal | 148.8° (300°) | | | |

| Line Speed m/min (ft/min) | | | | |
|---|---|---|---|---|
| | 18.28(60) | 6.09(20) | 18.28(60) | 15.24(50) |

| TD Draw | | | | |
|---|---|---|---|---|
| | 6 | 8 | 6 | 6 |

**Table 4 Film Properties of Biaxially Oriented Coextruded Film**

| Film Structure | A/B 10/90 | | | | | A/B/A 10/80/10 |
|---|---|---|---|---|---|---|
| Type Material | 350D60/ PD 4252E1 | | 377L60/ PD 4252E1 | | | A377L60/B PD 4252E1 |
| Initial Gauge µm | 250.4 | 500.8 | 250.4 | 250.4 | 500.8 | 250.4 |
| (mils) | (10) | (20) | (10) | (10) | (20) | (10) |

| MD/TD Draw Ratio* | | | | | | |
|---|---|---|---|---|---|---|
| Engineering | 4:6 | 5:9 | 3:8 | 4:8 | 5:8 | 5:6 |

| Gauge Mic µm (mils) | | | | | | |
|---|---|---|---|---|---|---|
| Testing Area | 7.11 | 8.38 | 7.36 | 6.35 | 10.9 | 8.12 |
| Average | (0.28) | (0.33) | (0.29) | (0.25) | (0.43) | (0.32) |

| Measuretech Profiler | | | | | | |
|---|---|---|---|---|---|---|
| Gauge Average | 6.8 | 8.38 | 8.89 | 5.58 | 9.9 | 7.8 |
| µm (mils) | (0.27) | (0.33) | (0.35) | (0.22) | (0.39) | (0.31) |
| Low | 5.08(0.20) | 5.08 (0.20) | 7.36 (0.29) | 4.57 (0.18) | 8.6 (0.34) | 6.09(0.24) |
| High | 9.9 | 13.7 | 13.2 | 7.11 | 14.7 | 10.9 |
| | (0.39) | (0.54) | (0.52) | (0.28) | (0.58) | (0.43) |

| Dart Drop Method A | | | | | | |
|---|---|---|---|---|---|---|
| (g) | 228 | 168 | 168 | 181 | 263 | 275 |
| g/µm (g/mil) | 32 (814) | 20 (509) | 22.8 (579) | 28.5 (724) | 24 (612) | 33.8 (859) |

| Puncture (Inside)*** | | | | | | |
|---|---|---|---|---|---|---|
| Peak Force kg | 7.22 | 7.78 | 6.75 | 5.7 | 10.4 | 6.75 |
| (1b.) | (15.09) | (17.13) | (14.87) | (12.57) | (22.83) | (14.85) |
| Peak Force | 4.66 | 4.5 | 4.4 | 4.35 | 4.6 | 4.0 |
| kg/µm (lb./mil) | (53.90) | (51.90) | (51.28) | (50.26) | (53.09) | (6.41) |
| Break Energy J (in-lb.) | 0.85 (7.60) | 0.58 (5.17) | 0.8 (7.07) | 0.53 (4.72) | 0.84 (7.43) | 0.97 (8.54) |
| Break Energy | 0.12 | 0.07 | 0.108 | 0.08 | 0.076 | 0.11 |
| J/µm (in-lb./mil) | (27.13) | (15.67) | (24.37) | (18.86) | (17.28) | (26.70) |

| Puncture (Outside)*** | | | | | | |
|---|---|---|---|---|---|---|
| Peak Force kg (lb.) | 5.15 (11.34) | 32.1 (14.62) | 4.4 (9.75) | 4.5 (10.04) | 8.2 (18.05) | 6.8 (15.02) |
| Peak Force kg/µm | 0.72 | 0.8 | 0.6 | 0.71 | 0.75 | 0.84 |
| (lb./mil) | (40.51) | (44.31) | (33.62) | (40.15) | (41.97) | (46.94) |
| Break Energy J (in-lb.) | 0.55 (4.89) | 0.46 (4.09) | 0.41 (3.67) | 0.38 (3.38) | 0.64 (5.73) | 1.08 (8.88) |
| Break Energy | 0.07 | 0.055 | 0.056 | 0.06 | 0.06 | 0.12 |
| J/µm(in-lb./mil) | (17.48) | (12.40) | (12.64) | (13.50) | (13.33) | (27.75) |

| Tensile @ Yield kPa (psi) | | | | | | |
|---|---|---|---|---|---|---|
| MD | 47,451 | 48,161 | 46,010 | 49.871 | 52,126 | 37,439 (5,430) |
| | (6,882) | (6,985) | (6,673) | (7,233) | (7,560) | |
| TD | 104,190 | 295,561 | 171,850 | 190,295 | 264,361 | 82,422 |
| | (15,111) | (42,866) | (24,924) | (27,599) | (38,341) | (11,954) |
| At 200% MD | 0 | 0 | 79,023 | 0 | 0 | 0 |
| | | | (11,461) | | | |

| Ultimate Tensile kPa (psi) | | | | | | |
|---|---|---|---|---|---|---|
| MD | 131,204 | 132,597 | 89,200 | 129,943 | 162,866 | 110,637 |
| | (19,029) | (19,231) | (12,937) | (18,846) | (23,621) | (16,046) |
| TD | 239,601 | 454,628 | 311,867 | 329,891 | 456,262 | 179,187 |
| | (34,750) | (65,936) | (45,231) | (47,845) | (66,173) | (25,988) |

| Elongation @ Yield (%) | | | | | | |
|---|---|---|---|---|---|---|
| MD | 4.1 | 4.3 | 4.2 | 4.2 | 4.5 | 4.2 |
| TD | 5.9 | 5.6 | 5.3 | 5.6 | 5.9 | 5.8 |

| Break Elongation (%) | | | | | | |
|---|---|---|---|---|---|---|
| MD | 133 | 140 | 239 | 155 | 142 | 145 |
| TD | 26 | 15 | 17 | 19 | 21 | 31 |
| Initial Gauge | 250.4 | 500.8 | 250.4 | 250.4 | 500.8 | 250.4 |
| µm (mils) | (10) | (20) | (10) | (10) | (20) | (10) |

| 1% Secant kPa (psi) | | | | | | |
|---|---|---|---|---|---|---|
| MD | 2,101,802 | 2,329,337 | 2,197.229 | 2,090,357 | 2,406,355 | 1,917,982 |
| | (304,830) | (337,830) | (318,670) | (303,170) | (349,000) | (278,170) |
| TD | 3,180,870 | 7.94x10⁶ | 51.62x10⁵ | 54.34x10⁵ | 67.24x10⁵ | 26.4x10⁵ |
| | (461,330) | (1,153,670) | (748,670) | (788,170) | (975,330) | (383,330) |

| Elmendorf Tear** | | | | | | |
|---|---|---|---|---|---|---|
| MD (g) | 1 | 2 | 2 | 1 | 2 | 2 |
| MD g/µm (g/mil) | 0.16 (4) | 0.23 (6) | 0.23 (6) | 0.19 (5) | 0.19 (5) | 0.23 (6) |
| TD (g) | 0 | 1 | 0 | 0 | 1 | 1 |
| TD g/µm (g/mil) | 0 | 0.115(3) | 0 | 0 | 0.08(2) | 0.115 (3) |

| Shrink (%) | | | | | | |
|---|---|---|---|---|---|---|
| MD | 57 | 58 | 58 | 64 | 72 | 42 |
| TD | 79 | 82 | 88 | 86 | 86 | 71 |
| Haze (%) | 0.63 | 0.77 | 1.07 | 0.97 | 0.97 | 1.20 * |
| Gloss (45) | 93 | 90 | 88 | 87 | 88 | 92 * |

| COF (kf) | | | | | | |
|---|---|---|---|---|---|---|
| (I/I) | No Sample | .49 | .46 | .43 | .39 | > 1.0 |
| (I/O) | | .51 | .43 | .40 | .40 | |
| (O/O) | | .52 | .53 | .49 | .44 | |
| WVTR g/µm/m²/day (gm x mil/100" sq/day) | | 5.2 (0.34) | | | 5.3 (0.35) | |

| | | | | | | |
|---|---|---|---|---|---|---|
| * Engineering draw ratios were determined during the trial. The Actual draw ratios were determined from the films produced. | | | | | | |
| ** Tear values were based on using a 200 gram pendulum. ASTM states that tear values are to be obtained from readings between 20 - 60% of pendulum weight. The tear values were so low, this was impossible. | | | | | | |
| ***Used 2 slip sheets of HDPE. | | | | | | |

**III** The films of the following examples 1 - 4 were prepared by coextruding and casting a 2-layer tape, and then biaxially orienting. The casting was done on a Black-Clawson line and the orientation on a pilot tenter line. The resulting films are described in Table 5 and the conditions used to orient the films on the pilot tenter line are summarized in Table 6.

The properties of the coextruded film were similar to those of biaxially oriented polypropylene film without the heat seal layer. For example, the products retained excellent optics (haze and gloss), Elmendorf tear was essentially equivalent 0.0039 g/µm (0.10 g/mil.). The ethylene copolymer heat seal layer was just 0.7 - 3.0 µm (0.03 to 0.12 ml), but microscopic examination showed that the heat seal layer drew uniformly with the polypropylene. Hot tack (1a) and sealing (1b) performance were measured along both machine direction (MD) and transverse direction (TD), see Figure 1. Though highly oriented, the seals introduced exhibited excellent appearance without observable shrinkage. For these examples the seal failure occurred at moderate force levels fully acceptable in industry, and the failure mechanism was largely by peeling rather than by tearing or breaking. The mode of failure at the exemplified moderate force levels illustrate utility for peelable seals desired for many packaging applications. The hot tack measurement, also in Figure 1, illustrate suitable values for the heat sealing at between 110 - 120 °C, a significant advantage over those temperatures required for heat sealing layers comprising polypropylene copolymers.

**Table 5 Examples of A/B Coextruded Structures Biaxially Oriented on Pilot Tenter Line**

| Coextruded Sample # | m-LLDPE | Polypropylene | Orientation, TDxMD | Final Film Thickness, mil (µm) |
|---|---|---|---|---|
| 1 | 10% 350D60 | 90% PD4252E1 | 5x9 | 8.3(0.33) |
| 2 | 10% 377L60 | 90% PD4252E1 | 5x8 | 9.9(0.39) |
| 3 | 10% 350D60 | 90% PD4252E1 | 4x6 | 6.8(0.27) |
| 4 | 10% 377L60 | 90% PD4252E1 | 3x8 | 8.89 (0.35) |

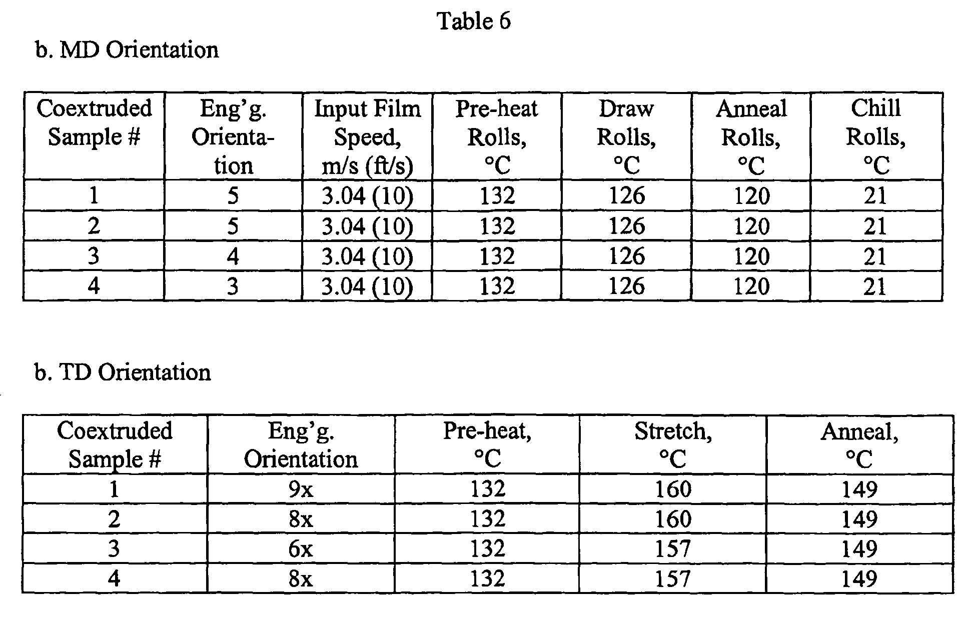

## Claims

1. An oriented multilayer film comprising:
(a) at least one outer layer comprising from 50 to 100 wt.% of an ethylene copolymer having a density of 0.900 to 0.935 g/cm³ and a composition distribution breadth index (CDBI) of 50 to 95%;
(b) a polypropylene core layer, the at least one outer layer being in contact with the propylene core layer; and
(c) a second outer layer, the second outer layer being in contact with the propylene core layer;
the film being made by coextrusion of the at least one outer layer, the core layer and the second outer layer, and subsequent orientation,
excluding a random copolymer of propylene and up to 20 weight % of ethylene or a terpolymer of propylene, ethylene and butene as the second outer layer.

2. Film according to claim 1, comprising:
(a) two outer layers comprising from 50 to 100 wt.% of the ethylene copolymer; and
(b) a polypropylene core layer in contact with the outer layers;
the film being made by coextrusion of the at least two outer layers and the core layer, and subsequent orientation.

3. Film according to claim 1 or claim 2, wherein the at least one outer layer comprises a blend of at least 50 wt.% of the ethylene copolymer, wherein the complement is minor amounts of essentially compatible ethylene-based homopolymers or copolymers.

4. Film according to claim 3, wherein the essentially compatible ethylene-based homopolymers or copolymers are selected from homopolymers or copolymers of ethylene and one or more of C₃-C₁₂ α-olefins, cyclic olefins, vinyl aromatic and polar vinyl monomers.

5. Film according to claim 4, wherein the blend comprising copolymers of ethylene and one or more of C₃-C₁₂ α-olefins have an overall density of 0.910 to 0.925 g/cm³ and a melt index (MI) I_{2.16} determined according to ASTM D 1238 (190°C, 2.16 kg) of 0.7 to 5.0 g/10 min.

6. Film according to claim 4, wherein the copolymers of ethylene and one or more of cyclic olefins, vinyl aromatic and polar vinyl monomers have 2 - 5 mol% comonomer and a melt index (MI) I_{2.16} determined according to ASTM D 1238 (190°C, 2.16 kg) of 0.7 to 5.0 g/10mins.

7. Film according to any one of claims 3 - 5, wherein the essentially compatible ethylene-based homopolymers or copolymers are selected from LDPE, plastomers, LLDPE, MLDPE, HDPE.

8. Film according to any one of claims 3 - 6, wherein the essentially compatible ethylene-based homopolymer or copolymer is a VLDPE having a density of 0.915 g/cm³ or less including plastomer ethylene copolymers with C₄-C₈ α-olefins having a density of 0.870 to 0.915 g/cm³.

9. Film according to claim 8, wherein the VLDPE having a density of 0.915 g/cm³ or less including plastomer ethylene copolymers with C₄-C₈ α-olefins having a density of 0.870 to 0.915 g/cm³ are present in an amount of up to 30 wt.%.

10. Film according to any one of claims 1 - 9, wherein the film is biaxially oriented.

11. Film according to any one of claims 1 - 10, wherein the ethylene copolymer has a molecular weight distribution (MWD) of 1.8 to 3.5, and a melt index (MI) I_{2.16} determined according to ASTM D 1238 (190°C, 2.16 kg) of 0.5 to 10 g/10 min.

12. Film according to any one of claim 1 - 11, wherein the ethylene copolymer has a density of 0.910 to 0.925 g/cm³.

13. Film according to any one of claims 1 - 12, wherein the ethylene copolymer has a melt index (MI) I_{2.16} determined according to ASTM D 1238 (190°C, 2.16 kg) of 0.7 to 8.0 g/10 min.

14. Film according to any one of claims 1 - 13, wherein the ethylene copolymer has a composition distribution breadth index (CDBI) of more than 55%.

15. Film according to any one of claims 1 - 14, wherein the propylene core layer comprises isotactic polypropylene compositions or blends.

16. Film according to any one of claims 1 - 15, wherein the propylene core layer comprises propylene polymers having a melt flow rate (MFR) determined according to ASTM D 1238 (230°C, 2.16 kg) of 1.0 to 40 g/10 min.

17. Film according to any one of claims 1 - 16, wherein the subsequent orientation is carried out using a tenter frame orientation process.

## Patentansprüche

1. Orientierte Mehrschichtfolie mit:
(a) mindestens einer Außenschicht mit 50 bis 100 Gew.-% Ethylen-Copolymer mit einer Dichte von 0,900 bis 0,935 g/cm³ und einem Breitenindex der Zusammensetzungsverteilung (CDBI) von 50 bis 95 %,
(b) einer Polypropylenkernschicht, wobei sich die mindestens eine Außenschicht im Kontakt mit der Propylenkernschicht befindet, und
(c) einer zweiten Außenschicht, wobei sich die zweite Außenschicht im Kontakt mit der Propylenkernschicht befindet,
wobei die Folie durch Co-Extrusion der mindestens einen Außenschicht, der Kernschicht und der zweiten Außenschicht und nachfolgende Orientierung hergestellt ist,
ausgenommen statistisches Copolymer von Propylen und höchstens 20 Gew.-% Ethylen oder Terpolymer von Propylen, Ethylen und Buten als die zweite Außenschicht.

2. Folie nach Anspruch 1 mit:
(a) zwei Außenschichten mit 50 bis 100 Gew.-% des Ethylen-Copolymers und
(b) einer Polypropylenkernschicht im Kontakt mit den Außenschichten,
wobei die Folie durch Co-Extrusion der mindestens zwei Außenschichten und der Kernschicht und nachfolgende Orientierung hergestellt ist.

3. Folie nach Anspruch 1 oder Anspruch 2, wobei die mindestens eine Außenschicht ein Gemisch mit mindestens 50 Gew.-% des Ethylen-Copolymers umfasst, wobei darüber hinaus geringere Mengen von im Wesentlichen kompatiblen ethylenbasierten Homopolymeren oder Copolymeren vorhanden sind.

4. Folie nach Anspruch 3, wobei die im Wesentlichen kompatiblen ethylenbasierten Homopolymere oder Copolymere ausgewählt sind aus Homopolymeren oder Copolymeren von Ethylen und einem oder mehreren C₃- bis C₁₂-α-Olefinen, cyclischen Olefinen, Vinylaromaten- und polaren Vinylmonomeren.

5. Folie nach Anspruch 4, wobei das Copolymere von Ethylen und einem oder mehreren C₃- bis C₁₂-α-Olefinen umfassende Gemisch eine Gesamtdichte von 0,910 bis 0,925 g/cm³ und einen Schmelzindex (MI) I_{2.16}, bestimmt gemäß ASTM D 1238 (190 °C, 2,16 kg), von 0,7 bis 5,0 g/10 Minuten besitzt.

6. Folie nach Anspruch 4, wobei die Copolymere von Ethylen und einem oder mehreren von cyclischen Olefinen, Vinylaromaten- und polaren Vinylmonomeren 2 bis 5 Mol.% Comonomer und einem Schmelzindex (MI) I_{2.16}, bestimmt gemäß ASTM D 1238 (190 °C, 2,16 kg), von 0,7 bis 5,0 g/10 Minuten besitzen.

7. Folie nach einem der Ansprüche 3 bis 5, wobei die im Wesentlichen kompatiblen ethylenbasierten Homopolymere oder Copolymere ausgewählt sind aus LDPE, Plastomeren, LLDPE, MLDPE, HDPE.

8. Folie nach einem der Ansprüche 3 bis 6, wobei das im Wesentlichen kompatible ethylenbasierte Homopolymer oder Copolymer VLDPE mit einer Dichte von 0,915 g/cm³ oder weniger einschließlich plastomeren Ethylen-Copolymeren mit C₄- bis C₈-α-Olefinen mit einer Dichte von 0,870 bis 0,915 g/cm³ ist.

9. Folie nach Anspruch 8, wobei das VLDPE mit einer Dichte von 0,915 g/cm³ oder weniger einschließlich plastomeren Ethylen-Copolymeren mit C₄- bis C₈-α-Olefinen mit einer Dichte von 0,870 bis 0,915 g/cm³ in einer Menge bis 30 Gew.-% vorhanden ist.

10. Folie nach einem der Ansprüche 1 bis 9, die biaxial orientiert ist.

11. Folie nach einem der Ansprüche 1 bis 10, wobei das Ethylen-Copolymer eine Molekulargewichtsverteilung (MWD) von 1,8 bis 3,5 und einen Schmelzindex (MI) I_{2.16}, bestimmt gemäß ASTM D 1238 (190 °C, 2,16 kg), von 0,5 bis 10 g/10 Minuten besitzt.

12. Folie nach einem der Ansprüche 1 bis 11, wobei das Ethylen-Copolymer eine Dichte von 0,910 bis 0,925 g/cm³ besitzt.

13. Folie nach einem der Ansprüche 1 bis 12, wobei das Ethylen-Copolymer einen Schmelzindex (MI) I_{2.16}, bestimmt gemäß ASTM D 1238 (190 °C, 2,16 kg), von 0,7 bis 8,0 g/10 Minuten besitzt.

14. Folie nach einem der Ansprüche 1 bis 13, wobei das Ethylen-Copolymer einen Breitenindex der Zusammensetzungsverteilung (CDBI) von mehr als 55 % besitzt.

15. Folie nach einem der Ansprüche 1 bis 14, wobei die Propylenkernschicht isotaktische Propylenzusammensetzungen oder -gemische umfasst.

16. Folie nach einem der Ansprüche 1 bis 15, wobei die Propylenkernschicht Propylenpolymere mit einer Schmelzfließrate (MFR), bestimmt gemäß ASTM D 1238 (230 °C, 2,16 kg), von 1,0 bis 40 g/10 Minuten besitzt.

17. Folie nach einem der Ansprüche 1 bis 16, wobei die nachfolgende Orientierung unter Verwendung eines Spannrahmenorientierungsverfahrens durchgeführt wird.

## Revendications

1. Film multicouche orienté, comprenant :
(a) au moins une couche extérieure comprenant 50 à 100 % en poids d'un copolymère d'éthylène ayant une masse volumique de 0,900 à 0,935 g/cm³ et un indice d'étendue de distribution de composition (CDBI) de 50 à 95 % ;
(b) une couche centrale de polypropylène, ladite au moins une couche extérieure étant en contact avec la couche centrale de propylène ; et
(c) une seconde couche extérieure, la seconde couche extérieure étant en contact avec la couche centrale de propylène ;
le film étant produit par coextrusion de ladite au moins une couche extérieure, de la couche centrale et de la seconde couche extérieure, avec ensuite une orientation,
en excluant un copolymère statistique de propylène et au maximum de 20 % en poids d'éthylène ou un terpolymère de propylène, d'éthylène et de butène comme seconde couche extérieure.

2. Film suivant la revendication 1, comprenant :
(a) deux couches extérieures comprenant 50 à 100 % en poids du copolymère d'éthylène ; et
(b) une couche centrale de polypropylène en contact avec les couches extérieures ;
le film étant produit par coextrusion desdites au moins deux couches extérieures et de la couche centrale, avec ensuite une orientation.

3. Film suivant la revendication 1 ou la revendication 2, dans lequel ladite au moins une couche extérieure comprend un mélange d'au moins 50 % en poids du copolymère d'éthylène, dans lequel le complément consiste en petites quantités d'homopolymères ou copolymères à base d'éthylène essentiellement compatibles.

4. Film suivant la revendication 3, dans lequel les homopolymères ou copolymères à base d'éthylène essentiellement compatibles sont choisis parmi des homopolymères ou copolymères d'éthylène et d'un ou plusieurs monomères α-oléfiniques en C₃ à C₁₂, oléfiniques cycliques, aromatiques vinyliques et vinyliques polaires.

5. Film suivant la revendication 4, dans lequel le mélange comprend des copolymères d'éthylène et d'une ou plusieurs α-oléfines en C₃ à C₁₂ ayant une masse volumique totale de 0,910 à 0,925 g/cm³ et un indice de fluidité (IF) I_{2,16} déterminé suivant la norme ASTM D 1238 (190°C, 2,16 kg) de 0,7 à 5,0 g/10 min.

6. Film suivant la revendication 4, dans lequel les copolymères d'éthylène et d'une ou plusieurs oléfines cycliques, ou d'un ou plusieurs monomères aromatiques vinyliques et monomères vinyliques polaires comprennent 2 à 5 % en moles de comonomère et ont un indice de fluidité (IF) I_{2,16} déterminé suivant la norme ASTM D 1238 (190°C, 2,16 kg) de 0,7 à 5,0 g/10 min.

7. Film suivant l'une quelconque des revendications 3 à 5, dans lequel les homopolymères ou copolymères à base d'éthylène essentiellement compatibles sont choisis entre le PEBD, des plastomères, le PELBD, le PEMBD et le PEHD.

8. Film suivant l'une quelconque des revendications 3 à 6, dans lequel l'homopolymère ou le copolymère à base d'éthylène essentiellement compatible est un PETBD ayant une masse volumique égale ou inférieure à 0,915 g/cm³, comprenant des copolymères d'éthylène plastomères avec des α-oléfines en C₄ à C₈ ayant une masse volumique de 0,870 à 0,915 g/cm³.

9. Film suivant la revendication 8, dans lequel les PETBD ayant une masse volumique égale ou inférieure à 0,915 g/cm³ comprenant des copolymères d'éthylène plastomères avec des α-oléfines en C₄ à C₈ ayant une masse volumique de 0,870 à 0,915 g/cm³ sont présents en une quantité allant jusqu'à 30 % en poids.

10. Film suivant l'une quelconque des revendications 1 à 9, ledit film étant orienté biaxialement.

11. Film suivant l'une quelconque des revendications 1 à 10, dans lequel le copolymère d'éthylène a une distribution des poids moléculaires (DPM) de 1,8 à 3,5 et un indice de fluidité (IF) I_{2,16} déterminé suivant la norme ASTM D 1238 (190°C, 2,16 kg) de 0,5 à 10 g/10 min.

12. Film suivant l'une quelconque des revendications 1 à 11, dans lequel le copolymère d'éthylène a une masse volumique de 0,910 à 0,925 g/cm³.

13. Film suivant l'une quelconque des revendications 1 à 12, dans lequel le copolymère d'éthylène a un indice de fluidité (IF) I_{2,16} déterminé suivant la norme ASTM D 1238 (190°C, 2,16 kg) de 0,7 à 8,0 g/10 min.

14. Film suivant l'une quelconque des revendications 1 à 13, dans lequel le copolymère d'éthylène a un indice d'étendue de distribution de composition (CDBI) supérieur à 55 %.

15. Film suivant l'une quelconque des revendications 1 à 14, dans lequel la couche centrale de propylène comprend des compositions ou mélanges de polypropylènes isotactiques.

16. Film suivant l'une quelconque des revendications 1 à 15, dans lequel la couche centrale de propylène comprend des polymères de propylène ayant une vitesse d'écoulement en masse fondue (MRF) déterminée suivant la norme ASTM D 1238 (230°C, 2,16 kg) de 1,0 à 40 g/10 min.

17. Film suivant l'une quelconque des revendications 1 à 16, dans lequel l'orientation ultérieure est effectuée en utilisant un procédé d'orientation en banc d'étirage.
